# EUROPÄISCHE PATENTANMELDUNG

(11) **EP 2 500 480 A2**
(43) Veröffentlichungstag der Anmeldung: **19.09.2012**
(21) Anmeldenummer: 12159682.9
(22) Anmeldetag: 15.03.2012
(51) Int. Cl.: E04B 2/88, E04B 2/90, E04F 13/08, E06B 3/54, H01L 31/042, F24J 2/52

(54) **Thermisch entkoppelte Konsole mit einem eine Auflagefläche aufweisenden Auflagenanker**

(30) Priorität: 17.03.2011 DE 102011001377
(71) Anmelder: Korff, Michael, 54-060 Wroclaw (PL)
(72) Erfinder: Korff, Michael, 54-060 Wroclaw (PL)
(74) Vertreter: Borchert, Uwe Rudolf

(57) **Zusammenfassung**

Eine Konsole mit einem eine Auflagefläche aufweisenden Auflageanker, welche an einer Anlage fixierbar ist, mit einem Befestigungsanker für den Kraftangriff eines mit dem Befestigungsanker verbindbaren Bauteils, wobei der Befestigungsanker so mit dem Auflageanker zusammenwirkt, dass Kräfte übertragen werden, wobei eine über den Befestigungsanker eingeleitete Kraft im an der Anlage montiertem Zustand über die Auflagefläche des Auflageankers flächig auf die Anlage übertragbar ist, der Auflageanker und der Befestigungsanker thermisch voneinander durch einen Dämmkörper entkoppelt sind.

## Beschreibung

Die Erfindung betrifft eine Konsole mit einem eine Auflagefläche ausweisenden Auflageanker gemäß der im Oberbegriff des Patentanspruches 1 angegebenen Art.

Derartige Konsolen bestehen aus einem eine Auflagefläche aufweisenden Auflageanker, welche an einer Anlage fixierbar ist. Die Anlage kann dabei eine natürliche Struktur, wie eine Felswand, ein Boden oder ähnliches sein, oder eine künstliche Struktur, wie eine Hauswand, ein Dach, ein Holz- oder Stahlfachwerk, oder eine sonstige Struktur sein. Über die Konsole werden dann beispielsweise Solarpaneele, Fassadenelemente und ähnliches an der Struktur befestigt. Die Konsole weist dabei einen Befestigungsanker für den Kraftangriff eines mit dem Befestigungsanker verbindbaren Bauteils auf. Der Befestigungsanker ist fest und unverlierbar mit dem Auflageanker verbunden. Die beiden Anker sind materialeinheitlich einstückig ausgebildet oder greifen als Profile ineinander ein und sind fest miteinander verbunden. Die über den Befestigungsanker eingeleitete Kraft wird dann im montierten Zustand über die Auflagefläche des Auflageankers flächig auf die Anlage, beispielsweise eine Hausfassade, übertragen und auf die Hausfassade flächig verteilt und eingebracht. Eine gattungsgemäße Konsole zeichnet sich somit dadurch aus, dass sie einen konzentrierten Kraftangriff - punkt- oder linienförmig - flächig über eine Auflagefläche auf die Anlage verteilt.

Problematisch bei den bekannten Konsolen ist jedoch, dass diese Wärmebrücken bilden. Dient beispielsweise die Konsole zur Befestigung eines Fassadenelementes, kann über die Konsole und die damit einhergehende Verbindung eine Wärmebrücke/Kältebrücke gebildet werden. Dies ist insbesondere bei gedämmten Flächen von Nachteil, beispielsweise an Fassaden oder Dächern. Insofern besteht großer Bedarf an einer Lösung dieses Problems.

Es werden seit langem große Anstrengungen unternommen, um die Wärmebrücken/Kältebrücken in der Fassadenverkleidung möglichst gering zu halten. Hierbei versucht man über entsprechende Formgebung von Profilen die Wärmebrücken/Kältebrücken möglichst zu minimieren. Es hat sich jedoch gezeigt, dass etwa eine vollkommene Vermeidung von Wärmebrücken/Kältebrücken mit den bisher bekannten Lösungen nicht möglich ist.

Aus der DE 10 2006 038 906 A1 ist eine gattungsgemäße Vorrichtung zum Befestigen von Fassadenplatten an einer Wand bekannt. Diese Vorrichtung weist einen Befestigungsanker und einer Auflageanker auf, welche über ein Zugelement miteinander verbunden sind. Ein Druckelement überträgt ebenfalls auftretende Kräfte des Fassadenelements auf den Auflageanker und entlastet dadurch den Zuganker. Der Zuganker stellt jedoch eine Wärmebrücken/Kältebrücken dar.

Es ist daher Aufgabe der Erfindung, eine Konsole mit einem eine Auflagefläche aufweisenden Auflageanker gemäß der im Oberbegriff des Anspruches 1 angegebenen Art derart weiterzubilden, dass Wärmebrücken/Kältebrücken von vorneherein vermieden werden. Dabei sollen die konstruktiven Möglichkeiten jedoch nicht eingeschränkt werden.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zu Grunde, dass von vorneherein eine thermisch entkoppelte Konsole geschaffen wird, bei der der Auflageanker auf der einen Seite und der Befestigungsanker auf der anderen Seite thermisch voneinander entkoppelt sind und eine unlösbare, unverlierbare Baueinheit bilden. Die thermische Entkopplung erfolgt dabei durch einen Dämmkörper. Der Dämmkörper kann dabei einstückig, materialeinheitlich oder mehrstückig und/oder zusammengesetzt ausgebildet sein.

Nach der Erfindung sind daher der Auflageanker und der Befestigungsanker thermisch voneinander durch einen Dämmkörper entkoppelt. Im Unterschied zum Stand der Technik wird somit von vorneherein eine thermisch entkoppelte Konsole geschaffen, mit der auf einfache Weise beispielsweise andere Bauteile, Hilfskonstruktionen, Sicherheitseinrichtungen, Fassadenelemente, Solarpaneele und ähnliche Aufbauten thermisch entkoppelt an natürliche Strukturen, wie Felswand, Boden oder ähnliches, oder künstlichen Strukturen, wie Wänden, Dächern und ähnliches montiert werden kann. Es ergeben sich dadurch eine Vielzahl von Anwendungen.

Nach einer Ausführunsgform der Erfindung ist der Dämmkörper fest mit dem Auflageanker und dem Befestigungsanker verbunden. Vorzugsweise ermöglicht der Dämmkörper eine Kraftübertragung über den Befestigungsanker auf den Auflageanker flächig auf die Anlage. Der Dämmkörper dient somitauch als Kraftübertragungselement.

Um den Dämmkörper vor mechanischen Einwirkungen, aber auch vor Wettereinflüssen zu schützen, ist der Dämmkörper gemäß einer Ausführungsform der Erfindung aus schlagfestem Dämmstoff gebildet und/oder von einer Hülle umgeben.

Vorzugsweise umgibt die Hülle den Dämmkörper zumindest seitlich nahezu vollständig und ermöglicht einen Schutz vor mechanischer Beschädigung des Dämmkörpers von außen. Die Hülle kann dabei aus Metall gebildet sein.

Gemäß einer weiteren Ausführungsform kann der Dämmkörper auch von einem Stabilisierungselement umgeben sein, das zur Stabilisierung des Dämmkörpers ausgelegt ist, und insbesondere Versteifungsrippen oder ähnliches aufweisen kann.

Dabei ist es auch möglich, dass das Stabilisierungselement und die Hülle ein gemeinsames Bauteil bilden.

Grundsätzlich kann die Konsole unterschiedliche Ausbildungen aufweisen. Gemäß einer Ausführungsform ist die Konsole, also die Einheit aus Auflageanker, Befestigungsanker und Dämmkörper, rotationssymmetrisch ausgebildet.

Vorzugsweise weist die Hülle und/oder das Stabilisierungselement eine im Querschnitt gestufte Ausbildung auf. Über die Stufung ergibt sich ein Formschluss und somit eine Stabilisierung der Konsole.

Der Schwachpunkt der Konsole nach der Erfindung ist der Dämmkörper, da zwischen dem Befestigungsanker und dem Auflageanker hohe Kräfte übertragen werden. Bei Überbeanspruchung kann der Dämmkörper zu Schaden kommen. Damit die Konsole trotzdem wirksam ist, und der Auflageanker und der Befestigungsanker weiterhin unverlierbar miteinander verbunden bleiben, sind in zumindest einer Richtung der Kraftübertragung zwischen Befestigungsanker und Auflageanker, insbesondere Längsrichtung, wirksame erste Hilfsanschlagmittel im Dämmkörper vorgesehen, welche beabstandet zueinander angeordnet sind, wobei jeweils ein erstes Hilfsanschlagmittel mit dem Auflageanker und eine weiteres erstes Hilfsanschlagmittel mit dem Befestigungsanker verbunden ist um erst bei Beschädigung des Dämmkörpers und einem aufeinander zu bewegen aufgrund einer anliegenden Kraft die ersten Hilfsanschlagmittel aneinander zur Anlage kommen und wirksam werden. Hierdurch wird auf einfache Weise gewährleistet, dass beispielsweise die über die Konsole montierten Fassadenplatten weiterhin erhalten bleiben, auch wenn der Dämmkörper - aus welchen Gründen auch immer - beschädigt ist und eine Kraftübertragung zwischen den Ankern über den Dämmkörper nicht mehr gewährleistet ist.

Das gleiche gilt bei einer Drehmomentbeanspruchung. Hierfür sind gemäß einer weiteren Ausführungsform der Erfindung zumindest in einer Drehrichtung bezogen auf eine Längsachse zur Drehmomentübertragung zwischen Auflageanker und Befestigungsanker wirksame, zweite Hilfsanschlagmittel im Dämmkörper vorgesehen, welche beabstandet zueinander angeordnet sind. Jeweils ein zweites Hilfsanschlagmittel ist dabei mit dem Auflageanker und ein zweites Hilfsanschlagmittel ist mit dem Befestigungsanker verbunden. Erst bei Beschädigung des Dämmkörpers und einem aufeinander zubewegen aufgrund eines anliegenden Drehmoments kommen die zweiten Hilfsanschlagmittel aneinander zur Anlage und werden wirksam.

Um eine optimale Kraftübertragung über den Dämmkörper zu ermöglichen, sind die Hilfsanschlagmittel so gestaltet, dass eine möglichst große Oberfläche für die Gegenseitige Anlage gegebenen ist.

Für bestimmte Anwendungen ist es von Vorteil, wenn der Dämmkörper feuerfest ausgebildet ist, um auch im Brandfall seine Funktion, zumindest über einen gewissen Zeitraum, uneingeschränkt ausführen zu können.

Der Dämmkörper kann ein Schaumstoff sein, der mit Gaseinschlüssen in jeweils einem Hohlraum versehen ist, insbesondere Polyurethan-Hart-Schaum umfassend. Dabei kann er auch als hochdämmfähiger Dämmkörper ausgebildet sein.

Um eine optimale Isolierung zu gewährleisten, umgibt der Dämmkörper weitestgehend alle wärmeleitenden Teile.

Der Werkstoff des Dämmkörpers kann hinsichtlich der gewünschten Belastung an seine Grenzen kommen. Gemäß einer Ausführungsform der Erfindung können daher in Bereichen, in denen bei Gebrauch Spannungsspitzen auftreten, zumindest thermisch oder thermisch und elektrisch minderleitende oder thermisch oder thermisch und elektrisch nicht leitende Werkstoffe eingebracht werden, wie Kohlefaserstifte, GFK-Profile, Keramik, Glas, Silikon und ähnliches. Der Dämmkörper umfasst somit derartige dämmende Verstärkungen als auch einen Dämmwerkstoff.

Der Auflageanker und der Befestigungsanker können aus metallischen Werkstoffen bestehen, insbesondere aus demselben Werkstoff oder aus unterschiedlichen Werkstoffen.

Der Befestigungsanker kann ein Gewinde, einen Schnellverschluss, einen Bajonettverschluss, eine Rasterverbindung, Steckverbindung und/oder ähnliches und/oder kombinierte Verbindung aufweisen, über die das Bauteil fest mit dem Befestigungsanker verbindbar ist.

Gemäß einer Ausführungsform der Erfindung weist der Auflageanker in der Draufsicht eine längliche, quadratische, rechteckige Grundform auf, insbesondere mit einem an die Auflage angepassten Querschnitt, um eine möglichst große Auflagefläche zu erhalten.

Der Befestigungsanker kann auch in Form einer Schiene ausgebildet sein an die das weitere Bauteil einfach oder mehrfach jeweils punktförmig oder linienförmig angreift. Die Kräfte werden dann flächig über den Auflageanker wieder auf die Anlage verteilt. Ist der Befestigungsanker rotationssymmetrisch ausgebildet, werden beispielsweise die Haltekräfte über ein Gewinde in den Befestigungsanker eingebracht und dann flächig über den Auflageanker an der Anlage verteilt.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Querschnittsansicht, durch eine Konsole nach der Erfindung gemäß einer ersten Ausführungsform;
- Fig. 2: eine schematische Querschnittsansicht, durch eine Konsole nach der Erfindung gemäß einer zweiten Ausführungsform;
- Fig. 3: eine schematische Querschnittsansicht, durch eine Konsole nach der Erfindung gemäß einer dritten Ausführungsform;
- Fig. 4: eine schematische Querschnittsansicht, durch eine Konsole nach der Erfindung gemäß einer vierten Ausführungsform, und
- Fig. 5: eine schematische perspektivische Querschnittsansicht einer fünften Ausführungsform der Erfindung;
- Fig. 6: eine Draufsicht auf die Ausführungsform von Fig. 5;
- Fig. 7: eine perspektivische Ansicht auf eine sechste Ausführungsform der Erfindung mit einer Schutzhülle, und
- Fig. 8: eine Querschnittsansicht der Ausführungsform von Fig. 7.

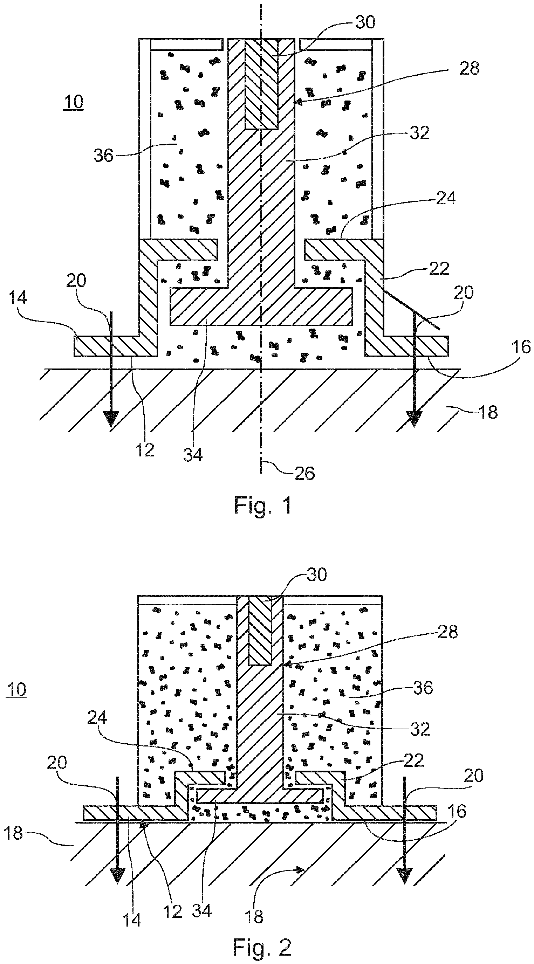

In Fig. 1 ist in einer schematischen Seitenansicht einer ersten Ausführungsform einer Konsole 10 nach der Erfindung dargestellt. Die Konsole 10 weist einen Auflageanker 12 auf, der seitlich mit einem Flansch 14 versehen ist. Die Unterseite des Flansches 14 bildet eine Auflagefläche 16, welche auf einer Hausfassade 18 aufliegt.

Der Flansch 14 ist mit Bohrungen 20 versehen. In die Bohrungen 20 und die Hausfassade 18 greifen hier nicht dargestellte Schrauben ein und fixieren den Auflageanker 12 auf der Fassade 18. Der Auflageanker 12 ist rotationssymmetrisch ausgebildet und weist einen zylindrischen Bereich 22 auf, von dem ein Innenring 24 an der Oberseite nach innen ragt. Konzentrisch zur Längsachse 26 der Konsole 10 ist ein Befestigungsanker 28 vorgesehen. Der Befestigungsanker 28 weist einen mit einer Gewindeinnenbohrung 30 versehenen Stift 32 auf. An seinem unteren Ende ist der Stift 32 mit einer Anschlagplatte 34 versehen. Die Anschlagplatte 34 des Befestigungsankers 28 als auch der Innenring 24 des Auflageankers 12 dienen als gegenseitige Anschläge und sind daher weitgehend aneinander gegenüberliegend angeordnet.

Der Befestigungsanker 28 und der Auflageanker 12 berühren einander nicht. Die Zwischenräume sind mit Polyurethan-Hart-Schaum ausgefüllt. Zudem ragt der durch den Polyurethan-Hart-Schaum gebildete Dämmkörper 36 bis zum oberen Ende des Stiftes 32 und schließt mit dem Stift 32 bündig ab und ist seitlich mit einer zylindrischen Außenform versehen.

Sollte der Dämmkörper 36 beschädigt werden, der Dämmkörper 36 dadurch eine Kraftübertragung zwischen dem Befestigungsanker 28 in Form des Stiftes 32 und der Anschlagplatte 34 auf der einen Seite und dem Auflageanker 12 in Form des Flansches 14, des Zylinders 22 und des Innenringes 24 auf der anderen Seite nicht mehr gewährleisten, und eine Kraft in einer Richtung der Längsachse 26 anliegen, wird entweder die Anschlagplatte 34 auf der Oberfläche der Fassade 18 zum Liegen kommen oder am Innenring 24 des Auflageankers 12. Die Konsole 10 hält also auch in diesem Falle die Befestigungsanker 28 und Auflageanker 12 unverlierbar zusammen.

Die Anschlagplatte 34 ist rechteckig ausgebildet, Zudem weist der Zylinder 22 eine der Form der Anschlagplatte 34 angepasste Innenkontur auf, die jedoch einen Zwischenraum und somit die thermische Entkoppelung über den Dämmkörper 36 gewährleistet. Bei Beschädigung des Dämmkörpers 36 in der Form, dass keine Drehmomente zwischen der Anschlagplatte 34 und der Innenkontur des Zylinders 22 über den Dämmkörper 36 mehr übertragen werden können und bei Anliegen eines Drehmomentes an dem Befestigungsanker 28 und einem Drehen der Anschlagplatte 34 um eine Drehachse, wird ein Drehen durch die Formgebung der Anschlagplatte 34 auf der einen Seite und der Innenkontur des Zylinders auf der anderen Seite verhindert. Die Anschlagplatte 34 dreht sich und bewegt sich somit auf die Innenkontur des Zylinders 22 zu und es kommt zu einem Anliegen der beiden Teile. Anschlagplatte 34 und der Zylinder 22 mit der Innenkontur wirken somit auch in eine Drehrichtung als Anschlag bei Beschädigung des Dämmkörpers 36. Die Konsole 10 hält also auch in diesem Falle die Befestigungsanker 28 und Auflageanker 12 unverlierbar zusammen.

Über die Gewindeinnenbohrung 30, die konzentrisch im Stift 32 angeordnet ist, werden weitere Bauteile wie beispielsweise Fassadenelemente, Solarpanele oder ähnliches befestigt.

In Fig. 2 ist eine zweite Ausführungsform der Erfindung dargestellt. Unterschiedlich zur oben dargestellten Ausführungsform ist, dass der Zylinder 22 sich innerhalb des Dämmkörpers 36 befindet und von diesem somit seitlich umgeben wird.

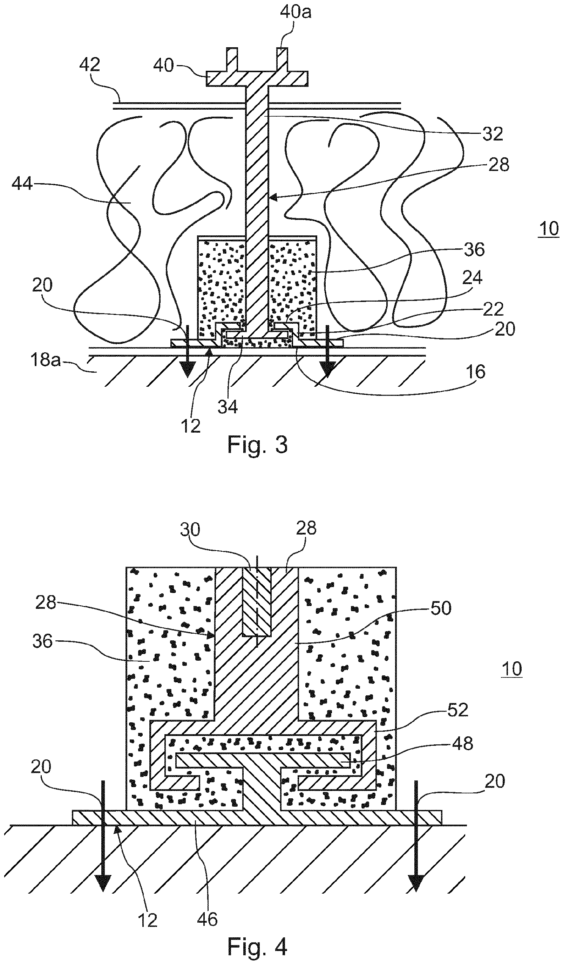

In Fig. 3 ist eine weitere Ausführungsform der Erfindung dargestellt. Der untere Bereich entspricht dabei der Ausführungsform von Fig. 2 lediglich der Stift 32 ragt über den Dämmkörper 36 hinaus. Am freien Ende des Stiftes 32 ist eine Montageplatte 40 angeordnet, die mit dem Stift 32 verschweißt ist. Auf der Montagplatte 40 sind Befestigungsmöglichkeiten 40a für Solarpanelle, Fassadenelemente und ähnliches vorgesehen.

Unterhalb der Montageplatte 40 ist eine Metallverkleidung 42 unterhalb der wiederum ein Dämmstoff 44 eingebracht ist. Die Metallverkleidung 42 und der Dämmstoff 44 sind Teil der Dachfläche oder Fassade.

Die Konsole ist auf einem Hausdach 18a befestigt.

In Fig. 4 ist eine weitere Ausführungsform einer Konsole 10 dargestellt. Die Konsole 10 ist dabei länglich ausgebildet und mit einer durchgehenden, rechteckigen Auflageplatte 46 versehen. Mittig ist ein T-Träger 48 fest mit der Auflageplatte verbunden, insbesondere verschweißt. Diesen T-Träger 48 umgreift von unten und oben und seitlich, jedoch beabstandet zu diesem ein mit einer Befestigungsschiene 50 verbundenes Profil 52. Die Befestigungsschiene 50 bildet den Befestigungsanker 28. In der Befestigungsschiene 50 sind mehrere Gewindeinnenbohrungen 30 eingebracht, um weitere Bauteile zu befestigen. Die Befestigungsschiene 50 ist allseitig in Bezug auf Fig. 4 nach oben gerichtete Fläche von dem Dämmkörper 36 umgeben. Im vorliegenden Fall ist zwar keine Schutzhülle seitlich vom Dämmkörper 36 vorgesehen, dies kann jedoch für bestimmte Anwendungen ohne weiteres realisiert werden. Dieses Teil kann auch rotationssymmetrisch ausgebildet sein.

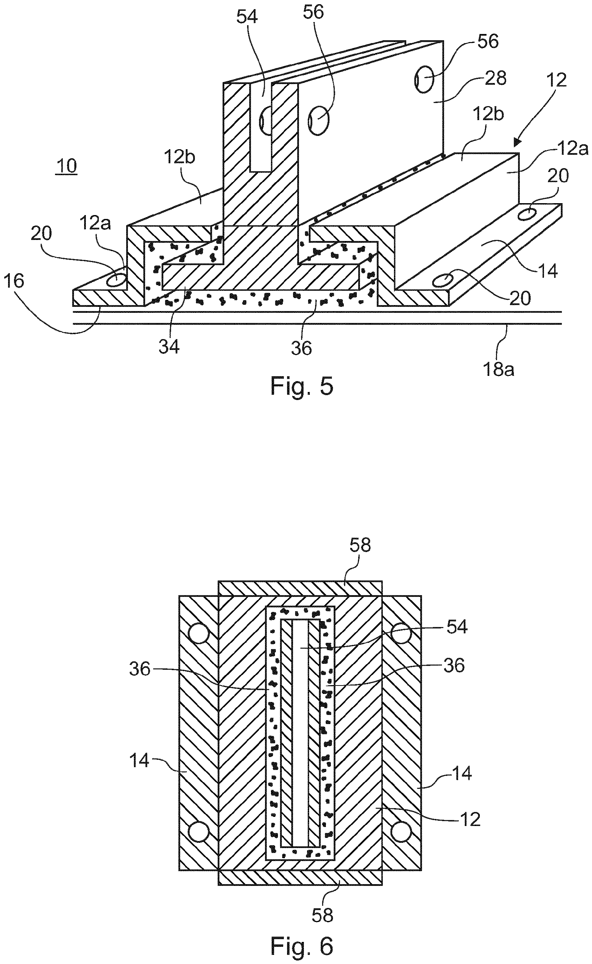

In Fig. 5 ist in einer perspektivischen Querschnittsansicht eine fünfte Ausführungsform einer Konsole 10 dargestellt. Die Konsole 10 ist dabei länglich ausgebildet und weist einen Auflageanker 12 auf, der seitlich mit einem Flansch 14 versehen ist. Die Unterseite des Flansches 14 bildet eine Auflagefläche 16, welche auf einem Hausdach 18a aufliegt. Der Flansch 14 ist mit Bohrungen 20 versehen. In die Bohrungen 20 und das Hausdach 18a greifen hier nicht dargestellte Schrauben ein und fixieren den Auflageanker 12 auf dem Hausdach 18a. Der Auflageanker 12 ist mit einer Seitenwand 12a und einer Oberwand 12b versehen. Oberwand 12a, Seitenwand 12b und Flansch 14 sind einstückig materialeinheitlich als Profilschiene ausgebildet. Der Auflageanker 12 weist zwei zueinander spiegelsymmetrisch entsprechend einer Längsebene ausgebildeten Profilschienen auf. Beide seitlichen Profilschienen bilden zusammen mit der Oberfläche des Hausdaches 18a einen Innenraum, in dem ein Befestigungsanker 28 in Form eines umgekehrten T-Trägers eingebracht ist. Das untere T-Stück des Befestigungsankers 28, der mit einer Anschlagplatte 34 versehen ist, und ist mit einem Dämmstoff aufweisenden Dämmkörper 36 umgeben. Der Dämmkörper 36 füllt den Innenraum aus, der durch die beiden Profilschienen des Auflageankers 12 und durch das die Oberfläche des Hausdaches 18a gebildet wird. Der Befestigungsanker 28 ragt mittig zwischen den beiden Profilschienen des Auflageankers 12 nach oben heraus. In die Zwischenräume zwischen den Profilschienen des Auflageankers 12 und des Befestigungsankers 28 ragt der Dämmkörper 36 hinein und schließt mit der Oberfläche der Oberwand 12b der beiden Profilschienen bündig ab.

Der Befestigungsanker 28 weist eine nach oben offene Nut 54 auf, in die in regelmäßigen Abständen Bohrungen 56 nebeneinander eingebracht sind. In die Nut 54 können Leisten von mit der Konsole 10 zu verbindenden Bauteilen eingebracht werden, welche über in die Bohrungen 56 eingebrachte Schrauben in den Befestigungsanker 28 fixiert werden. Die Vorder- und Rückseite des Auflageankers sind mit einer Abdeckplatte 58 versehen, siehe Figur 6, welche den Dämmkörper 36, der den Befestigungsanker 28 weitestgehend umschließt, seitlich abdeckt und vor mechanischer Beschädigung schützt.

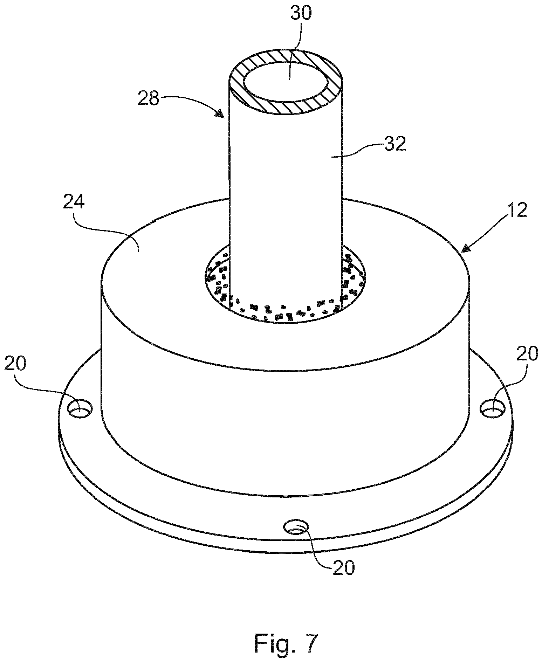

In Figur 7 ist eine weitere Ausführungsform einer Konsole 10 dargestellt, welche eine Abwandlung von Figur 1 darstellt. Hierbei endet der Dämmkörper an der Oberseite des Innenrings 24. Der Auflageanker 12 bildet zugleich eine Schutzhülle für den Dämmkörper 36 vor mechanischer Beschädigung. Ansonsten ist diese Ausführungsform entsprechend der Figur 1 ausgebildet.

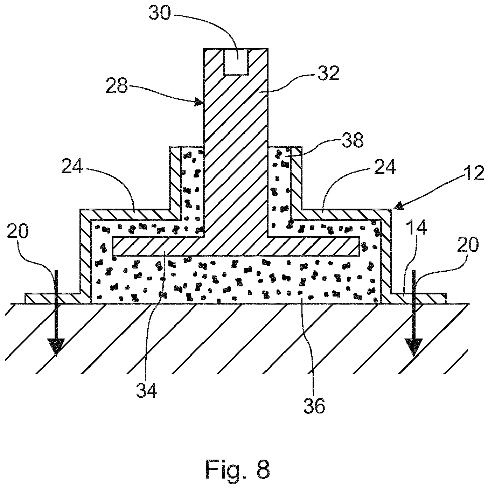

In Figur 8 ist eine Variante zu Figur 7 dargestellt. An den Innenring 24 schließt sich noch nach oben ein zentrisch zur Konsole 10 angeordneter Zylinder 38 an. Zylinder 38, Innenring 24, als auch Flansch 14 sind materialeinheitlich einstückig ausgebildet. Zwischen Zylinder 38 und dem Befestigungsanker 28 greift der nach oben verlängerte Dämmkörper 36 ein und schließt bündig mit der freien Stirnseite des Zylinders 38 ab.

### Bezugszeichenliste

- 10: Konsole
- 12: Auflageanker
- 12a: Seitenwand
- 12b: Oberwand
- 14: Flansch
- 16: Auflagefläche
- 18: Fassade
- 18a: Hausdach
- 20: Bohrungen
- 22: Zylinder
- 24: Innenring
- 26: Längsachse
- 28: Befestigungsanker
- 30: Gewindeinnenbohrung
- 32: Stift
- 34: Anschlagplatte
- 36: Dämmkörper
- 38: Zylinder
- 40: Montageplatte
- 40a: Befestigungsmöglichkeiten
- 42: Metallverkleidung
- 44: Dämmstoff
- 46: Auflageplatte
- 48: T-Träger
- 50: Befestigungsschiene
- 52: Profil
- 54: Nut
- 56: Bohrung
- 58: Abdeckplatte

## Patentansprüche

1. Konsole (10) mit einem eine Auflagefläche (16) aufweisenden Auflageanker (12), welche an einer Anlage (18, 18a) fixierbar ist, mit einem Befestigungsanker (28) für den Kraftangriff eines mit dem Befestigungsanker (28) verbindbaren Bauteils, wobei der Befestigungsanker (28) so mit dem Auflageanker (12) zusammenwirkt, dass Kräfte übertragen werden, **dadurch gekennzeichnet, dass** eine über den Befestigungsanker (28) eingeleitete Kraft im an der Anl age (18, 18a) montiertem Zustand über die Aufl agefl äche (16) des Auflageankers (12) flächig auf die Anlage (18, 18a) übertragbar ist, der Auflageanker (12) und der Befestigungsanker (28) thermisch voneinander durch einen Dämmkörper (36) entkoppelt sind.

2. Konsole nach Anspruch 1, **dadurch gekennzeichnet, dass** der Dämmkörper (36) fest mit dem Auflageanker (12) und dem Befestigungsanker (28) verbunden ist und vorzugsweise eine Kraftübertragung über den Befestigungsanker (28) auf den Auflageanker (12) flächig auf die Anlage (18, 18a) ermöglicht.

3. Konsole nach Anspruch 1 oder 2, **dadurch gekennzeichnet, dass** der Dämmkörper (36) von einer Hülle (38) umgeben ist, insbesondere dass die Hülle (38) den Dämmkörper (36) zumindest seitlich nahezu vollständig umgibt und einen Schutz vor mechanischer Beschädigung des Dämmkörpers (36) von außen ermöglicht, insbesondere aus Metall gebildet ist.

4. Konsole nach einem der vorangehenden Ansprüche, **dadurch gekennzeichnet, dass** der Dämmkörper (36) von zumindest einem Stabilisierungselement umgeben ist, das zur Stabilisierung des Dämmkörpers (36) ausgelegt ist, und insbesondere Versteifungsrippen aufweist, vorzugsweise die Hülle (38) und das Stabilisierungselement ein gemeinsames Bauteil bilden.

5. Konsole nach einem der vorangehenden Ansprüche, **gekennzeichnet durch** eine rotationssymmetrische Ausbildung der Einheit aus Auflageanker (12), Befestigungsanker (28) und Dämmkörper (36).

6. Konsole nach einem der vorangehenden Ansprüche 3 bis 5, **dadurch gekennzeichnet, dass** die Hülle (38) und/oder das Stabilisierungselement eine im Querschnitt gestufte Ausbildung aufweisen.

7. Konsole nach einem der vorangehenden Ansprüche, **dadurch gekennzeichnet, dass** in zumindest einer Richtung der Kraftübertragung zwischen Auflageanker (12) und Befstigungsanker (28), insbesondere Längsrichtung, wirksame erste Hilfsanschlagmittel im Dämmkörper (36) vorgesehen sind, welche beabstandet zueinander angeordnet sind, wobei jeweils ein erstes Hilfsanschlagmittel (34) mit dem Auflageanker (12) und ein weiteres erstes Hilfsanschlagmittel (24) mit dem Befestigungsanker (28) verbunden ist und erst bei Beschädigung des Dämmkörpers (36) und einem aufeinander zu bewegen aufgrund einer anliegenden Kraft die ersten Hilfsanschlagmittel (24, 34) aneinander zur Anlage kommen und wirksam werden.

8. Konsole nach einem der vorangehenden Ansprüche, **dadurch gekennzeichnet, dass** zumindest in einer Drehrichtung bezogen auf eine Längsachse (26) zur Drehmomentübertragung zwischen Auflageanker (12) und Befstigungsanker (28) wirksame, zweite Hilfsanschlagmittel (24, 34) im Dämmkörper (36) vorgesehen sind, welche beabstandet zueinander angeordnet sind, wobei jeweils ein zweites Hilfsanschlagmittel (34) mit dem Auflageanker (12) und ein zweites Hilfsanschlagmittel (24) mit dem Befestigungsanker (28) verbunden ist und erst bei Beschädigung des Dämmkörpers (36) und einem aufeinander zu bewegen aufgrund eines anliegenden Drehmoments die zweiten Hilfsanschlagmittel (24, 34) aneinander zur Anlage kommen und wirksam werden.

9. Konsole (10) nach Anspruch 7 oder 8, **dadurch gekennzeichnet, dass** die Hilfsanschlagmittel im Dämmkörper (36) so gestaltet sind, dass eine möglichst große Oberfläche für die gegenseitige Anlage gegeben ist.

10. Konsole (10) nach einem der vorangehenden Ansprüche, **dadurch gekennzeichnet, dass** der Dämmkörper (36) ein Schaumstoff ist, der mit Gaseinschlüssen in jeweils einen Hohlraum versehen ist, insbesondere Polyurethan-Hart-Schaum umfasst, vorzugsweise auch als hochdämmfähiger Körper ausgebildet ist, wobei vorzugsweise der Dämmkörper (36) feuerfest ausgebildet ist.

11. Konsole (10) nach einem der vorangehenden Ansprüche, **dadurch gekennzeichnet, dass** der Dämmkörper (36) weitestgehend alle wärmeleitenden Teile umgibt.

12. Konsole (10) nach einem der vorangehenden Ansprüche, **dadurch gekennzeichnet, dass** der Dämmkörper (36) in Bereichen, in denen bei Gebrauch Spannungsspitzen auftreten, zumindest elektrisch minderleitende oder elektrisch nichtleitende Werkstoffe umfasst, wie Kohlefaserstifte, GFK-Profile, Keramik, Glas, Silikon und ähnliches.

13. Konsole (10) nach einem der vorangehenden Ansprüche, **dadurch gekennzeichnet, dass** der Auflageanker (12) und der Befestigungsanker (28) aus metallischem Werkstoffe, insbesondere aus demselben Werkstoff, bestehen.

14. Konsole (10) nach einem der vorangehenden Ansprüche, **dadurch gekennzeichnet, dass** der Befestigungsanker (28) ein Gewinde (30), einen Schnellverschluss, einen Bajonettverschluss und/oder eine Rastverbindung, aufweist, über die das Bauteil fest mit dem Befestigungsanker (28) verbindbar ist.

15. Konsole (10) nach einem der vorangehenden Ansprüche, **dadurch gekennzeichnet, dass** der Auflageanker (12) in der Draufsicht eine längliche, quadratische, rechteckige Grundform aufweist, insbesondere mit einem an die Auflage angepassten Querschnitt versehen ist, um eine möglichst große Auflagefläche zu erhalten.
